# FASCICULE DE BREVET EUROPEEN

(11) **EP 2 676 057 B1**
(45) Date de publication et mention de la délivrance du brevet: **03.02.2016**
(21) Numéro de dépôt: 12707863.2
(22) Date de dépôt: 06.02.2012
(51) Int. Cl.: F16K 11/048, F16K 11/056

(54) **VANNE A TROIS VOIES.**
DREIWEGEVENTIL
THREE-WAY VALVE

(30) Priorité: 16.02.2011 FR 1151261
(43) Date de publication de la demande: 25.12.2013
(73) Titulaire: Snecma, 75015 Paris (FR)
(72) Inventeur: PASSAGOT, Gérard, F-27200 Vernon (FR)
(74) Mandataire: Calvo de Nó, Rodrigo
(86) Numéro de dépôt international: PCT/FR2012/050246
(87) Numéro de publication internationale: WO 2012/110727

(56) Documents cités:
- FR-A1- 2 254 741
- FR-A1- 2 487 942
- US-A1- 2010 032 036

## Description

La présente invention concerne les vannes à trois voies, et en particulier les vannes à trois voies avec une entrée fluidique, et une première et une deuxième sorties fluidiques.

Selon le document FR 2 487 942 on connaît une vanne à trois voies.

Les vannes à trois voies sont des dispositifs permettant de commander le flux d'un fluide, liquide ou gazeux, et utilisés dans une grande variété de systèmes fluidiques. Parmi les systèmes utilisant des vannes à trois voies on trouve, par exemple, les systèmes de commande d'attitude et roulis de fusées, lanceurs ou engins spatiaux, dans lesquels des telles vannes à trois voies servent à piloter le flux de gaz vers des tuyères propulsives, ou les systèmes d'alimentation en propergols de moteurs propulsifs de tels engins.

Ainsi, on connaît, dans les systèmes de commande d'attitude et roulis des étages du lanceur Ariane 5, une vanne à trois voies comportant un carter présentant une entrée fluidique et une première et deuxième sorties fluidiques, et un élément mobile dans ce carter. Dans cette vanne à trois voies l'élément mobile comprend une tige, un premier corps de soupape fixé sur une première extrémité de la tige, et un deuxième corps de soupape fixé sur une deuxième extrémité de la tige. Le premier corps de soupape est apte à être reçu, en direction de la tige, dans un premier siège de soupape pour fermer un premier passage fluidique entre l'entrée fluidique et la première sortie fluidique, et le deuxième corps de soupape est apte à être reçu, en direction de la tige, dans un deuxième siège de soupape pour fermer un deuxième passage entre la première et la deuxième sortie fluidique. La longueur de la tige permet un déplacement de l'élément mobile entre une première position dans laquelle le premier passage est fermé et le deuxième passage ouvert, et une deuxième position dans laquelle le premier passage est ouvert et le deuxième passage fermé. Ainsi, dans la première position, l'entrée est bloquée et la pression des deux sorties est égalisée, tandis que dans la deuxième position la vanne permet un flux fluidique de l'entrée à la première sortie, tout en isolant la deuxième.

Des telles vannes peuvent être soumises à des contraintes mécaniques extrêmes, notamment vibratoires. Un problème qui peut alors se poser est un décentrage des corps de soupape par rapport à leurs sièges de soupape correspondants, par déplacement radial ou inclinaison de la tige par rapport au carter. Ce décentrage peut être la cause d'endommagement des corps et/ou des sièges de soupape lors des déplacements de l'élément mobile, et aussi causer un ralentissement des mouvements ou même un blocage de la vanne. Or, la résistance aux environnements vibratoires ainsi que la vitesse et la fiabilité de réponse de la vanne sont des facteurs fondamentaux dans des telles applications.

Dans l'art antérieur, on a cherché à résoudre ce problème en guidant la tige dans un alésage étroit dans le carter. Toutefois, cette solution implique un certain frottement, est donc aussi un ralentissement et risque de blocage de la vanne.

L'invention vise à proposer une vanne à trois voies qui permette de commuter entre deux positions avec une grande fiabilité et un frottement nul ou négligeable.

Dans au moins un mode de réalisation de la présente invention, ce but est atteint grâce au fait que la vanne comporte aussi au moins un ressort membrane soutenant l'élément mobile dans un plan sensiblement perpendiculaire à un axe de déplacement entre la première et la deuxième positions. Un tel ressort de membrane présentant une rigidité très supérieure dans son plan que sur un axe perpendiculaire à son plan, il permet ainsi de maintenir le centrage de l'élément mobile avec un frottement presque nul.

Avantageusement, cette vanne à trois voies comporte un premier ressort membrane soutenant une première extrémité de l'élément mobile et un deuxième ressort membrane soutenant une deuxième extrémité de l'élément mobile. De cette manière on assure non seulement le centrage global de l'élément mobile, mais aussi le centrage individuel de chacun de deux corps de soupape, et donc l'alignement de l'élément mobile avec son axe de déplacement.

Avantageusement, la vanne comporte aussi un actionneur pour le déplacement dudit élément mobile, tel que, par exemple, un actionneur électromagnétique ou un actionneur fluidique. On pourra ainsi piloter la vanne à travers cet actionneur.

Avantageusement, la vanne comporte en outre un ressort de rappel de l'élément mobile vers la première position. Ainsi, sans actionnement contraire de l'élément mobile, celui-ci retourne automatiquement vers la première position, bloquant ainsi l'entrée de la vanne. Alternativement, l'au moins un ressort membrane peut être précontraint pour rappeler l'élément mobile vers la première position. Le ressort membrane pourrait ainsi remplir aussi la fonction de ressort de rappel.

L'invention concerne également un dispositif de commande de flux fluidique comportant une première vanne à trois voies suivant l'invention, à commande électromagnétique, et une deuxième vanne à trois voies suivant l'invention, à commande fluidique, l'actionneur fluidique de la deuxième vanne à trois voies étant connecté à la première sortie fluidique de la première vanne à trois voies. Ainsi, la première vanne fonctionne comme vanne pilote de la deuxième vanne, permettant ainsi de commander indirectement des débits fluidiques importants avec un actionneur électromagnétique de petite capacité.

L'invention concerne également un dispositif de commande d'attitude et/ou roulis, en particulier de fusée ou engin spatial, comportant un circuit de fluide propulsif suivant l'invention. Par « fluide propulsif » on entend tant un gaz propulsif directement expulsé par une tuyère en aval de la vanne, qu'un propergol destiné à alimenter une chambre propulsive à au moins un propergol.

La présente invention concerne aussi un procédé d'assemblage d'une vanne à trois voies suivant l'invention, dans lequel le montage dudit au moins un ressort membrane est effectué avec ledit élément mobile dans ladite première ou deuxième position. Ainsi, ce montage est terminé alors qu'un des corps de soupape est reçu, centré, dans le siège de soupape correspondant, ce qui sert à assurer le centrage du ressort membrane par l'intermédiaire du centrage du ressort membrane sur le corps de soupape. En particulier, lorsque la vanne à trois voies comporte un premier ressort membrane soutenant une première extrémité de l'élément mobile, et un deuxième ressort membrane soutenant une deuxième extrémité de l'élément mobile, le montage du premier ressort membrane est avantageusement obtenu avec ledit élément mobile dans ladite première position, et le montage du deuxième ressort membrane est avantageusement obtenu avec ledit élément mobile dans ladite deuxième position. On assure ainsi le centrage individuel des deux ressorts membranes.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1a est une coupe longitudinale d'une vanne à trois voies à commande électromagnétique suivant un premier mode de réalisation de l'invention, dans une première position ;
- la figure 1b est une coupe longitudinale de la vanne de la figure 1a, dans une deuxième position ;
- la figure 2 est une vue de face d'un ressort membrane de la vanne des figures 1a et 1b ;
- la figure 3 est une coupe longitudinale d'un dispositif de commande de flux fluidique comportant une première vanne à trois voies à commande électromagnétique suivant le premier mode de réalisation de l'invention illustré sur les figures 1a et 1b, et une deuxième vanne à trois voies à commande fluidique suivant un deuxième mode de réalisation de l'invention ; et
- les figures 4a à 4c illustrent comment la vanne des figures 1a et 1b est partiellement assemblée.

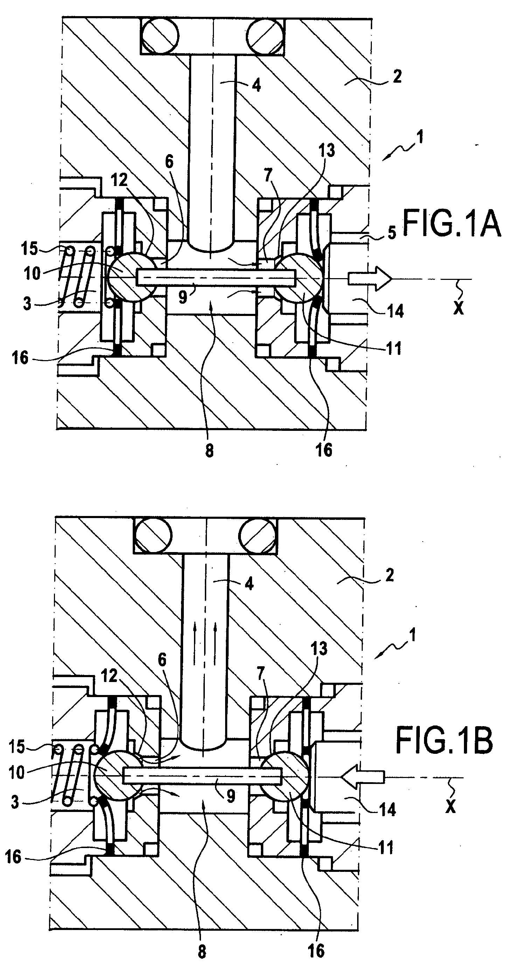

Une vanne 1 à trois voies suivant un premier mode de réalisation de l'invention est illustrée sur les figures 1a et 1b. Cette vanne 1 comporte un carter 2 avec une entrée fluidique 3, une première sortie fluidique 4 et une deuxième sortie fluidique 5. Un premier passage fluidique 6 relie l'entrée 3 à la première sortie 4, et un deuxième passage fluidique 7 relie la première sortie 4 à la deuxième sortie 5. Un élément mobile 8 est reçu dans le carter 2. Cet élément mobile 8 comporte une tige 9 avec, sur chaque extrémité, un corps de soupape 10, 11.

Bien que dans le mode de réalisation illustré les deux corps de soupape 10, 11 soient sphériques, la personne du métier pourrait aussi considérer d'autres formes alternatives suivant les circonstances. En outre, bien que dans le mode de réalisation illustré la tige 9 et les corps de soupape 10, 11 soient des pièces distinctes, la tige 9 pourrait aussi alternativement être formée intégralement à au moins un des corps de soupape 10, 11.

Le premier corps de soupape 10 est du côté de l'entrée fluidique 3, tandis que le deuxième corps de soupape 11 est du côté de la deuxième sortie fluidique 5. La première sortie fluidique 4 est entre les deux corps de soupape 10 et 11. Le premier corps de soupape 10 fait face, en direction de la tige 9, à un premier siège de soupape 12 percé par le premier passage fluidique 6, lequel est traversé par la tige 9. Le deuxième corps de soupape 11 fait face, en direction de la tige 9, à un deuxième siège de soupape 13 percé par le deuxième passage fluidique 7, lequel est aussi traversé par la tige 9. La longueur de la tige 9 est telle que l'élément mobile 8 peut se déplacer entre une première position, illustrée sur la figure 1a, dans laquelle le premier corps de soupape 10 est reçu dans le siège de soupape 12, fermant ainsi le premier passage 6 et isolant l'entrée fluidique 3, et une deuxième position, illustrée sur la figure 1b, dans laquelle le deuxième corps de soupape 11 est reçu dans le deuxième siège de soupape 13, fermant ainsi le deuxième passage 7 et isolant la deuxième sortie fluidique 5. Dans la première position, le deuxième corps de soupape 11 présente un écart par rapport au siège 13, le deuxième passage 7 étant donc ouvert et permettant ainsi un drainage de la première sortie 4 vers la deuxième sortie 5, tandis que, dans la deuxième position, le premier corps de soupape 10 présente un écart par rapport au siège 12, le premier passage 6 étant donc ouvert et permettant l'alimentation de la première sortie 4 par l'entrée 3.

Pour actionner le déplacement de l'élément mobile 8 entre la première et la deuxième position, la vanne 1 comporte aussi un actionneur électromagnétique 14 et un ressort 15. Le ressort 15 est un ressort de rappel de l'élément mobile 8 vers la première position, tandis que l'actionneur électromagnétique 14, lorsqu'il est activé, pousse l'élément mobile 8, dans la direction opposée au ressort 15, vers la deuxième position. Ainsi, la première position est la position de défaut de l'élément mobile 8, isolant ainsi automatiquement l'entrée fluidique 3 en cas de défaillance de l'actionneur électromagnétique 14.

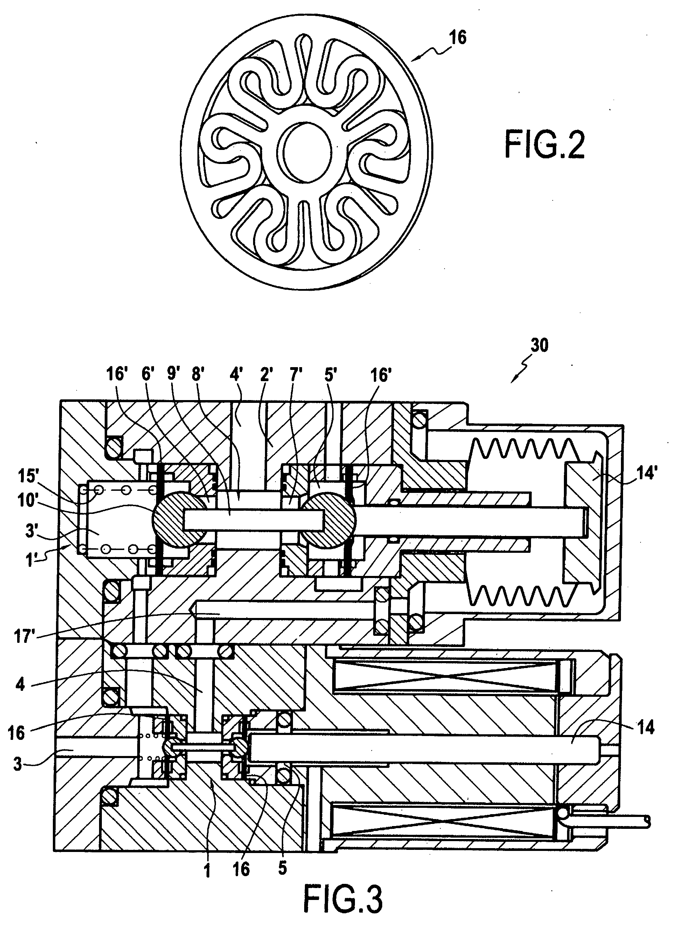

Afin de maintenir le centrage des deux corps de soupape 10,11, chacun des deux corps 10,11 est soutenu dans le carter 2 par un ressort membrane 16 plat. Un tel ressort membrane 16 est illustré sur la figure 2. Ce ressort membrane 16 est sensiblement plus rigide dans son plan que dans un axe perpendiculaire à son plan. En l'orientant perpendiculairement à l'axe X de déplacement de l'élément mobile 8, il assure ainsi le soutien radial et le centrage des deux corps 10, 11, tout en permettant leur déplacement dans l'axe X avec une résistance minimale. Le ressort membrane 16 présente des ouvertures, et permet ainsi aussi le passage de fluide à travers son plan. Eventuellement, au moins un des ressorts membranes 16 peut être précontraint en direction de la deuxième position pour rappeler l'élément mobile vers la première position, et ainsi remplir aussi la fonction du ressort 15.

Bien que dans le premier mode de réalisation illustré sur les figures 1a et 1b l'actionneur soit électromagnétique, d'autres types d'actionneurs, tels que, par exemple, des actionneurs fluidiques, peuvent aussi être utilisés. Ainsi, sur la figure 3 est illustré un dispositif 30 de commande de flux fluidique comportant une vanne à trois voies 1' suivant un deuxième mode de réalisation, avec un actionneur fluidique 14' relié pour sa commande à une vanne à trois voies 1 pilote à actionneur électromagnétique suivant le premier mode de l'invention. Ainsi, la vanne à trois voies 1' à commande fluidique peut être de capacité sensiblement plus grande que la vanne à trois voies 1 à commande électromagnétique, et servir ainsi à amplifier le signal fluidique de cette vanne pilote 1.

Comme la vanne à trois voies 1 à commande électromagnétique suivant le premier mode de réalisation de l'invention, la vanne à trois voies 1' à commande fluidique comporte un carter 2' avec une entrée fluidique 3', une première sortie fluidique 4' et une deuxième sortie fluidique 5'. Un premier passage fluidique 6' relie l'entrée 3' à la première sortie 4', et un deuxième passage fluidique 7' relie la première sortie 4' à la deuxième sortie 5'. Un élément mobile 8' est reçu dans le carter 2'. Cet élément mobile 8' comporte une tige 9' avec, sur chaque extrémité, un corps de soupape 10', 11'. Des formes alternatives aux formes sphériques illustrées peuvent aussi être considérées pour ces corps de soupape 10', 11'.

Le premier corps de soupape 10' est du côté de l'entrée fluidique 3', tandis que le deuxième corps de soupape 11' est du côté de la deuxième sortie fluidique 5'. La première sortie fluidique 4' est entre les deux corps de soupape 10' et 11'. Le premier corps de soupape 10' fait face, en direction de la tige 9', à un premier siège de soupape 12' percé par le premier passage fluidique 6', lequel est traversé par la tige 9'. Le deuxième corps de soupape 11' fait face, en direction de la tige 9', à un deuxième siège de soupape 13' percé par le deuxième passage fluidique 7', lequel est aussi traversé par la tige 9'. Comme dans le premier mode de réalisation, la longueur de la tige 9' est telle que l'élément mobile 8' peut se déplacer entre une première position dans laquelle le premier corps de soupape 10' est reçu dans le siège de soupape 12', fermant ainsi le premier passage 6' et isolant l'entrée fluidique 3', et une deuxième position dans laquelle le deuxième corps de soupape 11' est reçu dans le deuxième siège de soupape 13', fermant ainsi le deuxième passage 7' et isolant la deuxième sortie fluidique 5'. Dans la première position, le deuxième corps de soupape 11' présente un écart par rapport au siège 13', le deuxième passage 7' étant donc ouvert et permettant ainsi un drainage de la première sortie 4 vers la deuxième sortie 5', tandis que, dans la deuxième position, le premier corps de soupape 10' présente un écart par rapport au siège 12', le premier passage 6' étant donc ouvert et permettant l'alimentation de la première sortie 4' par l'entrée 3'.

Comme dans le premier mode de réalisation, la vanne à trois voies 1' comporte un ressort 15' de rappel vers la première position et des ressorts membrane 16' de support et centrage des corps de soupape 10', 11' dans l'axe X' de déplacement de l'élément mobile 8'. Toutefois, l'actionneur 14' de cette vanne 1' est un actionneur fluidique, formé par un soufflet en connexion avec une entrée fluidique 17' de commande, plutôt qu'un actionneur électromagnétique. Dans le dispositif 30, l'entrée 17' de commande de l'actionneur fluidique 14' de la vanne à trois voies 1' à commande fluidique est connectée à la première sortie fluidique 4 de la vanne à trois voies 1 à commande électromagnétique, laquelle sert ainsi de vanne pilote pour la vanne à trois voies 1' à commande fluidique. Ainsi, quand l'actionneur électromagnétique 14 est activé, un fluide pressurisé provenant de l'entrée fluidique 3 de la première vanne à trois voies 1 est dirigé vers sa première sortie fluidique 4 et l'entrée fluidique 17' de commande de l'actionneur fluidique 14' de la deuxième vanne 1', déplaçant l'élément mobile 8' de sa première à sa deuxième position, et permettant ainsi le passage d'un fluide sous pression de son entrée 3' à sa première sortie 4'. Si l'actionneur électromagnétique 14 est désactivé ensuite, le fluide sous pression dans l'actionneur fluidique 14' peut être évacué à travers son entrée fluidique de commande 17', la première sortie 4 de la première vanne 1 et la deuxième sortie 5 de cette première vanne 1. Ainsi, le ressort de rappel 15' de la deuxième vanne 1' pourra rappeler l'élément mobile 8' vers sa première position, fermant le passage 6' entre l'entrée 3' et la première sortie 4' de la deuxième vanne 1' et ouvrant le passage 7' d'évacuation entre la première sortie 4' et la deuxième sortie 5' de la deuxième vanne 1'. L'actionneur électromagnétique 14 de la première vanne 1 commande ainsi indirectement la deuxième vanne 1'. Tout comme les ressorts membrane 16 de la première vanne 1, les ressorts membrane 16' de la deuxième vanne 1' peuvent aussi être précontraints de manière à exercer un rappel de l'élément mobile 8' vers la première position.

Le dispositif 30 de commande de flux fluidique peut être intégré dans un système de commande d'attitude et/ou roulis d'une fusée ou engin spatial. Dans ce cas, la deuxième vanne 1' sert à commander le passage d'un fluide propulsif à travers sa première sortie 4' vers une tuyère propulsive, si le fluide propulsif est un gaz directement expulsé par cette tuyère, ou vers une chambre propulsive, si le fluide propulsif étant un propergol participant à une réaction exothermique dans cette chambre propulsive avant son expulsion par une tuyère de cette chambre propulsive.

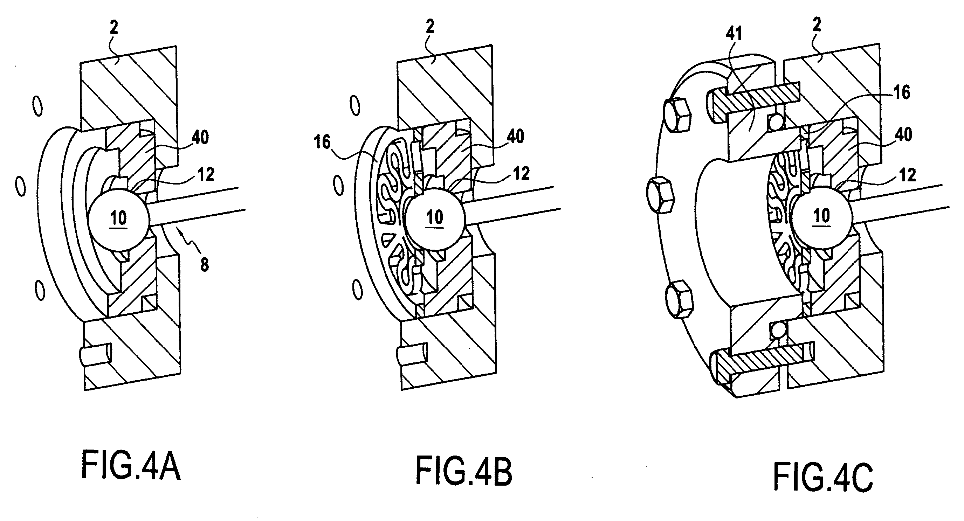

Le montage des ressorts membranes est illustré sur les Figures 4A à 4C sur l'exemple du montage du premier ressort membrane 16 du premier corps de soupape 10
de la première vanne à trois voies 1. Sur la Figure 4A on peut voir comment l'élément mobile 8 est mis dans la première position de manière à asseoir le corps de soupape 10 dans le siège de soupape 12 correspondant. Avec le corps de soupape 10 naturellement centré dans cette position, le ressort membrane 16 y est apposé, comme illustré sur la Figure 4B. Ainsi, le ressort membrane 16 est aussi centré, et on peut procéder à sa fixation par rapport au carter 2 en le pinçant entre deux pièces 40, 41 fixées audit carter 2, dont la première comporte le siège de soupape 12, comme illustré sur la Figure 4C. Ce même procédé de montage du ressort membrane peut aussi être utilisé sur chacun des autres ressorts membranes 16, 16', avec, à chaque fois, le corps de soupape 10, 11, 10', 11' correspondant en position de réception dans son siège de soupape 12, 13, 12', 13'.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, même si la vanne à trois voies à commande fluidique suivant le deuxième mode de réalisation de l'invention a été illustrée uniquement en combinaison avec une vanne à trois voies à commande électromagnétique suivant le premier mode de réalisation de l'invention, elle peut aussi être utilisée indépendamment de celle-ci. D'autres types d'actionneurs peuvent aussi être utilisés selon les circonstances. Par conséquent, la description et les dessins doivent être considérés dans un sens illustratif plutôt que restrictif.

## Revendications

1. Vanne à trois voies (1,1') comportant :
un carter (2,2') présentant une entrée fluidique (3,3'), une première et deuxième sorties fluidiques (4,5 ; 4',5'), un premier passage fluidique (6,6') entre l'entrée (3,3') et la première sortie (4,4') fluidiques, et un deuxième passage fluidique (7,7') entre les première et deuxième sorties fluidiques (4,5 ; 4',5') ;
un élément mobile (8,8') reçu dans ce carter (2,2') et comportant :
une tige (9,9') ;
un premier corps de soupape (10,10') fixé sur une première extrémité de la tige (9,9') et apte à être reçu, en direction de la tige (9,9'), dans un premier siège de soupape (12,12') pour fermer le premier passage fluidique (6,6') ; et
un deuxième corps de soupape (11,11') fixé sur une deuxième extrémité de la tige (9,9') et apte à être reçu, en direction de la tige (9,9'), dans un deuxième siège de soupape du carter pour fermer le deuxième passage fluidique (7,7'), la longueur de la tige (9,9') permettant un déplacement de l'élément mobile (8,8') entre une première position dans laquelle le premier passage (6,6') est fermé et le deuxième passage (7,7') ouvert, et une deuxième position dans laquelle le premier passage (6,6') est ouvert et le deuxième passage (7,7') fermé ; et
**caractérisée en ce qu'**elle comporte aussi au moins un ressort membrane (16,16') soutenant l'élément mobile (8,8') dans un plan sensiblement perpendiculaire à un axe de déplacement (X) entre la première et la deuxième positions.

2. Vanne à trois voies (1,1') suivant la revendication 1, comportant un premier ressort membrane (16,16') soutenant une première extrémité de l'élément mobile (8,8'), et un deuxième ressort membrane soutenant une deuxième extrémité de l'élément mobile (8,8').

3. Vanne à trois voies (1,1') suivant une quelconque des revendications 1 ou 2, et comportant un actionneur (14,14') pour le déplacement dudit élément mobile (8,8').

4. Vanne à trois voies (1) suivant la revendication 3, dans laquelle ledit actionneur (14) est un actionneur électromagnétique.

5. Vanne à trois voies (1') suivant la revendication 3, dans laquelle ledit actionneur (14') est un actionneur fluidique.

6. Vanne à trois voies (1,1') suivant l'une quelconque des revendications 1 à 5, comportant en outre un ressort (15,15') de rappel de l'élément mobile (8,8') vers la première position.

7. Vanne à trois voies (1,1') suivant l'une quelconque des revendications 1 à 5, dans laquelle l'au moins un ressort membrane (16,16') est précontraint pour rappeler l'élément mobile (8,8') vers la première position.

8. Dispositif (20) de commande de flux fluidique comportant une première vanne à trois voies (1) à commande électromagnétique suivant la revendication 4 et une deuxième vanne à trois voies (1') à commande fluidique suivant la revendication 5, l'actionneur fluidique (14') de la deuxième vanne à trois voies (1') étant connecté à la première sortie fluidique (4) de la première vanne à trois voies (1).

9. Système de commande d'attitude et/ou roulis comportant au moins un circuit de fluide propulsif avec une vanne à trois voies (1,1') suivant l'une quelconque des revendications 1 à 7.

10. Procédé d'assemblage d'une vanne à trois voies (1,1') suivant la revendication 1, dans lequel le montage dudit au moins un ressort membrane (16,16') est complété avec ledit élément mobile dans ladite première ou deuxième position.

11. Procédé d'assemblage d'une vanne à trois voies (1,1') suivant la revendication 2, dans lequel le montage du premier ressort membrane (16,16') est complété avec ledit élément mobile (8,8') dans ladite première position, et le montage du deuxième ressort membrane (16,16') est complété avec ledit élément mobile (8,8') dans ladite deuxième position.

## Patentansprüche

1. Dreiwegeventil (1, 1'), umfassend:
ein Gehäuse (2, 2'), das einen Fluideinlass (3, 3'), einen ersten und einen zweiten Fluidauslass (4, 5; 4', 5'), einen ersten Fluiddurchlass (6, 6') zwischen dem Fluideinlass (3, 3') und dem ersten Fluidauslass (4, 4') sowie einen zweiten Fluiddurchlass (7, 7') zwischen dem ersten und dem zweiten Fluidauslass (4, 5; 4', 5') aufweist,
ein bewegliches Element (8, 8'), das in diesem Gehäuse (2, 2') aufgenommen ist und umfasst:
eine Stange (9, 9'),
einen ersten Ventilkörper (10, 10'), der an einem ersten Ende der Stange (9, 9') befestigt und geeignet ist, in Richtung der Stange (9, 9') in einem ersten Ventilsitz (12, 12') aufgenommen zu werden, um den ersten Fluiddurchlass (6, 6') zu verschließen, und
einen zweiten Ventilkörper (11, 11'), der an einem zweiten Ende der Stange (9, 9') befestigt und geeignet ist, in Richtung der Stange (9, 9') in einem zweiten Ventilsitz des Gehäuses aufgenommen zu werden, um den zweiten Fluiddurchlass (7, 7') zu verschließen, wobei die Länge der Stange (9, 9') ein Bewegen des beweglichen Elements (8, 8') zwischen einer ersten Position, in der der erste Durchlass (6, 6') verschlossen und der zweite Durchlass (7, 7') geöffnet ist, und einer zweiten Position, in der der erste Durchlass (6, 6') geöffnet und der zweite Durchlass (7, 7') verschlossen ist, ermöglicht, und
**dadurch gekennzeichnet, dass** es auch wenigstens eine Membranfeder (16, 16') umfasst, die das bewegliche Element (8, 8') in einer Ebene im Wesentlichen senkrecht zu einer Bewegungsachse (X) zwischen der ersten und der zweiten Position unterstützt.

2. Dreiwegeventil (1, 1') nach Anspruch 1, umfassend eine erste Membranfeder (16, 16'), die ein erstes Ende des beweglichen Elements (8, 8') unterstützt, und eine zweite Membranfeder, die ein zweites Ende des beweglichen Elements (8, 8') unterstützt.

3. Dreiwegeventil (1, 1') nach einem der Ansprüche 1 oder 2 und umfassend einen Antrieb (14, 14') für das Bewegen des beweglichen Elements (8, 8').

4. Dreiwegeventil (1) nach Anspruch 3, wobei der Antrieb (14) ein elektromagnetischer Antrieb ist.

5. Dreiwegeventil (1') nach Anspruch 3, wobei der Antrieb (14') ein fluidischer Antrieb ist.

6. Dreiwegeventil (1, 1') nach einem der Ansprüche 1 bis 5, ferner umfassend eine Feder (15, 15') zum Rückstellen des beweglichen Elements (8, 8') in Richtung der ersten Position.

7. Dreiwegeventil (1, 1') nach einem der Ansprüche 1 bis 5, wobei die wenigstens eine Membranfeder (16, 16') vorgespannt ist, um das bewegliche Element (8, 8') in Richtung der ersten Position rückzustellen.

8. Vorrichtung (20) zur Fluidstromsteuerung, umfassend ein erstes Dreiwegeventil (1) mit elektromagnetischer Steuerung nach Anspruch 4 und ein zweites Dreiwegeventil (1') mit fluidischer Steuerung nach Anspruch 5, wobei der fluidische Antrieb (14') des zweiten Dreiwegeventils (1') an den ersten Fluidauslass (4) des ersten Dreiwegeventils (1) angeschlossen ist.

9. System zur Steuerung von Fluglage und/oder Rollen, umfassend wenigstens einen Flüssigtreibstoffskreis mit einem Dreiwegeventil (1, 1') nach einem der Ansprüche 1 bis 7.

10. Verfahren zur Montage eines Dreiwegeventils (1, 1') nach Anspruch 1, bei dem die Montage der wenigstens einen Membranfeder (16, 16') vervollständigt wird, während sich das bewegliche Element in der ersten oder zweiten Position befindet.

11. Verfahren zur Montage eines Dreiwegeventils (1, 1') nach Anspruch 2, bei dem die Montage der ersten Membranfeder (16, 16') vervollständigt wird, während sich das bewegliche Element (8, 8') in der ersten Position befindet, und die Montage der zweiten Membranfeder (16, 16') vervollständigt wird, während sich das bewegliche Element (8, 8') in der zweiten Position befindet.

## Claims

1. A three-port valve (1, 1') comprising:
· a casing (2, 2') presenting a fluid inlet (3, 3'), first and second fluid outlets (4, 5; 4', 5'), a first fluid-flow passage (6, 6') between the fluid inlet (3, 3') and the first fluid outlet (4, 4'), and a second fluid-flow passage (7, 7') between the first and second fluid outlets (4, 5; 4', 5'); and
· a movable element (8, 8') received in the casing (2, 2') and comprising:
· a rod (9, 9') ;
· a first valve member (10, 10') fastened to a first end of the rod (9, 9') and suitable for being received towards the rod (9, 9') in a first valve seat (12, 12') for closing the first fluid-flow passage (6, 6'); and
· a second valve member (11, 11') fastened to a second end of the rod (9, 9') and suitable for being received towards the rod (9, 9') in a second valve seat of the casing for closing the second fluid-flow passage (7, 7'), the length of the rod (9, 9') enabling the movable element (8, 8') to move between a first position in which the first passage (6, 6') is closed and the second passage (7, 7') is open, and a second position in which the first passage (6, 6') is open and the second passage (7, 7') is closed;
the valve being **characterized in that** it also includes at least one diaphragm spring (16, 16') supporting the movable element (8, 8') in a plane substantially perpendicular to a movement axis (X) between the first and second positions.

2. A three-port valve (1, 1') according to claim 1, including a first diaphragm spring (16, 16') supporting a first end of the movable element (8, 8') and a second diaphragm spring supporting a second end of the movable element (8, 8').

3. A three-port valve (1, 1') according to claim 1 or claim 2, and including an actuator (14, 14') for moving said movable element (8, 8').

4. A three-port valve (1) according to claim 3, wherein said actuator (14) is an electromagnetic actuator.

5. A three-port valve (1') according to claim 3, wherein said actuator (14') is a fluid-driven actuator.

6. A three-port valve (1, 1') according to any one of claims 1 to 5, further including a return spring (15, 15') for returning the movable element (8, 8') towards the first position.

7. A three-port valve (1, 1') according to any one of claims 1 to 5, wherein the at least one diaphragm spring (16, 16') is prestressed in order to urge the movable element (8, 8') towards the first position.

8. A fluid flow control device (20) comprising a first three-port valve (1) under electromagnetic control according to claim 4, and a second three-port valve (1') under fluid-flow control according to claim 5, said fluid-driven actuator (14') of the second three-port valve (1') being connected to the first fluid outlet (4) of the first three-port valve (1).

9. An attitude and/or roll control system including at least one propulsive fluid circuit with a three-port valve (1, 1') according to any one of claims 1 to 7.

10. A method of assembling a three-port valve (1, 1') according to claim 1, wherein the mounting of said at least one diaphragm spring (16, 16') is finished off with said movable element in its first or second position.

11. A method of assembling a three-port valve (1, 1') according to claim 2, wherein the mounting of the first diaphragm spring (16, 16') is finished off with said movable element (8, 8') in said first position, and the mounting of said second diaphragm spring (16, 16') is finished off with said movable element (8, 8') in said second position.
